# EUROPEAN PATENT APPLICATION

(11) **EP 4 520 152 A2**
(43) Date of publication of application: **12.03.2025**
(21) Application number: 24197614.1
(22) Date of filing: 30.08.2024
(51) Int. Cl.: A01B 45/02

(54) **TOWABLE ELEMENTS FOR LAWNMOWERS AND LAWNMOWERS WITH TOWABLE ELEMENTS**

(30) Priority: 08.09.2023 US 202363537355 P
(71) Applicant: Techtronic Cordless GP, Anderson, SC 29621 (US)
(72) Inventor: BAKER, David J., Anderson, 29621 (US)
(74) Representative: Novagraaf Group

(57) **Abstract**

A towable element for a lawnmower, the towable element includes a carriage defining a work tool receiving area; an engagement feature coupled to the carriage, wherein the engagement feature removably interfaces with a complementary engagement feature of the lawnmower to selectively couple the towable element with the lawnmower; and a work tool removably disposed at the work tool receiving area, wherein the work tool acts on an underlying ground surface below the towable element.

## Description

### FIELD

The present disclosure relates generally to lawnmowers, and more particularly to lawnmowers having towable elements and towable elements configured to be used with lawnmowers.

### BACKGROUND

Lawnmowers are generally utilized to maintain lawns. Operators must traverse the entire lawn with the lawnmower in order to evenly maintain the lawn. Operators frequently perform additional steps when maintaining lawns. For example, operators may apply seeding to the lawn, aerate the lawn, rake the lawn, or the like. These additional steps typically require the operator to perform a second pass over the lawn. This second pass requires additional time and effort.

Accordingly, improved systems and methods for use in maintaining lawn are desired in the art. In particular, systems and methods which allow an operator to efficiently maintain lawn by allowing simultaneous lawn maintenance operations would be advantageous.

### BRIEF DESCRIPTION

Aspects and advantages of the invention in accordance with the present disclosure will be set forth in part in the following description, or may be obvious from the description, or may be learned through practice of the technology.

In accordance with one embodiment, a towable element for a lawnmower is provided. The towable element includes a carriage defining a work tool receiving area; an engagement feature coupled to the carriage, wherein the engagement feature removably interfaces with a complementary engagement feature of the lawnmower to selectively couple the towable element with the lawnmower; and a work tool removably disposed at the work tool receiving area, wherein the work tool acts on an underlying ground surface below the towable element.

In accordance with another embodiment, a lawnmower is provided. The lawnmower includes a plurality of wheels; a mower deck supported by the plurality of wheels; a cutting implement disposed below the mower deck; a motor to drive the cutting implement; a handle extending rearward from the mower deck; a towable element removably coupled to a complementary engagement feature of the lawnmower, the towable element comprising: a carriage defining a work tool receiving area; an engagement feature coupled to the carriage, wherein the engagement feature removably interfaces with the complementary engagement feature of the lawnmower to selectively couple the towable element with the lawnmower; and a work tool removably disposed at the work tool receiving area, wherein the work tool acts on an underlying ground surface below the towable element.

In accordance with another embodiment, a work tool for a towable element is provided. The work tool includes an attachment feature configured to interface with a plurality of gated openings in a carriage of the towable element to removably retain the work tool in a work tool receiving area of the carriage; a walking element configured to support the work tool while the lawnmower traverses the underlying ground surface, wherein the walking element is integral with the work tool; and a tool operably coupled to the walking element such that movement of the walking element drives the tool to move.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a rear perspective view of a lawnmower with a towable element coupled therewith in accordance with embodiments of the present disclosure;
FIG. 2 is a schematic view of the lawnmower with the towable element in accordance with embodiments of the present disclosure;
FIG. 3 is a perspective view of a towable element in accordance with embodiments of the present disclosure;
FIG. 4 is a perspective view of the towable element in accordance with embodiments of the present disclosure;
FIG. 5 is a perspective view of a portion of the towable element in accordance with embodiments of the present disclosure;
FIG. 6 is a perspective view of a portion of the towable element in accordance with embodiments of the present disclosure;
FIG. 7 is a perspective view of a towable element in accordance with embodiments of the present disclosure;
FIG. 8 is a side view of a lawnmower with the towable element in accordance with embodiments of the present disclosure;
FIG. 9 is a perspective view of a powered tool of the towable element in accordance with embodiments of the present disclosure;
FIG. 10 is a perspective view of a portion of the towable element in accordance with embodiments of the present disclosure;
FIG. 11 is a perspective view of the towable element with a cover in accordance with embodiments of the present disclosure;
FIG. 12 is a top view of the towable element in accordance with embodiments of the present disclosure as seen with a top of the towable element removed;
FIG. 13 is a perspective view of the towable element in accordance with embodiments of the present disclosure;
FIG. 14 is a perspective view of a striper for use with the towable element in accordance with embodiments of the present disclosure;
FIG. 15 is a side view of a lawnmower with the towable element having the striper interfaced with the towable element in accordance with embodiments of the present disclosure;
FIG. 16 is a perspective view of a towable element in accordance with embodiments of the present disclosure;
FIG. 17 is a perspective view of the towable element in accordance with embodiments of the present disclosure;
FIG. 18 is a rear view of a portion of the towable element in accordance with embodiments of the present disclosure;
FIG. 19 is a perspective view of a comb for use with the towable element in accordance with embodiments of the present disclosure;
FIG. 20 is a perspective view of a comb for use with the towable element in accordance with embodiments of the present disclosure;
FIG. 21 is a perspective view of a scarifier for use with the towable element in accordance with embodiments of the present disclosure; and
FIG. 22 is a perspective view of the towable element in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

Lawnmowers are generally utilized to cut grass and maintain a lawn at a desirable height. Embodiments described herein provide the lawnmower with additional functionality. Specifically, embodiments described herein allow an operator to utilize the lawnmower with one or more accessory features that each perform one or more different operational functionalities to assist in lawn maintenance. By way of non-limiting example, the accessory features can be selected from a plurality of different work tools including, e.g., lawn dethatchers, aerators, rollers or stripers, nut pickers, and scarifiers. Yet other accessory features may be selectable. These accessory features may be interchangeably swapped with one another to provide the operator with customizable functionality. Swapping between the accessory features may be performed without the use of tools and without requiring the operator to assemble or disassemble any portion of the lawnmower. Some accessory features may be passive while other accessory features can be active (powered). One exemplary active accessory feature is a dethatcher. The dethatcher can include a dethatching tool including a plurality of dethatching elements. The detaching tool can be rotatably driven by movement of the accessory feature over the lawn. As the dethatching tool is rotatably driven, the dethatching elements lift matted thatch from the lawn. However, unlike with passive accessory features which move as a direct result of their own relative movement over the lawn, the dethatcher may include a geared interface which transmits movement from another portion of the accessory feature, e.g., a wheel of the accessory feature, to the dethatching tool to rotate the dethatching tool at a speed greater than can be achieved by rolling the dethatcher directly along the ground.

The accessory features described herein can be used with various types of lawnmowers. In the embodiment referenced by the figures and described below, the accessory features are used with a push mower. The push mower may be at least partially powered to roll on the ground using force generated by onboard motors. The operator can walk behind the push mower and the accessory features, referred to below as work tools, to maintain a desirable heading for the lawnmower. Each of the accessory features can meanwhile provide the desired functionality achieved by that accessory feature.

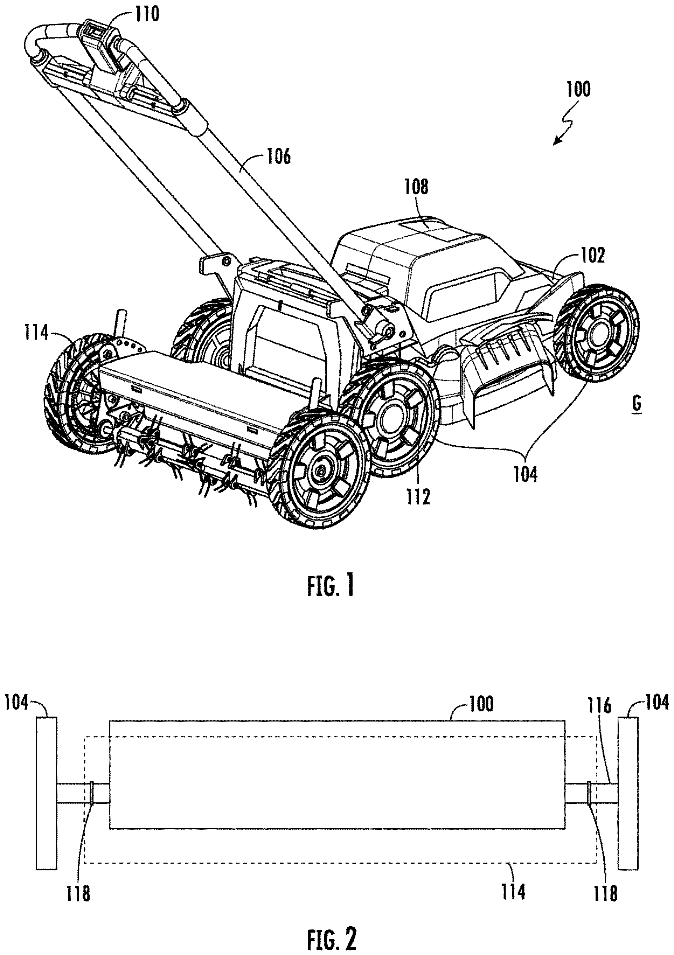

Referring now to the drawings, FIG. 1 illustrates a lawnmower 100 including a mower deck 102 supported by a plurality of wheels 104, a cutting implement (not illustrated) disposed below the mower deck, a motor (not illustrated) to drive the cutting implement, and a handle 106 extending rearward from the mower deck 102. The cutting implement can include a blade, a plurality of blades (e.g., rotated relative to one another), a trimmer line, or the like. The motor can be disposed within a housing 108 of the lawnmower 100. The motor can include a DC motor that drives an output shaft coupled to the cutting implement. Alternatively, the motor can include a gas powered engine or AC interface. As the motor rotates the output shaft, the cutting implement can move to cut a lawn on an underlying ground surface G over which the lawnmower 100 traverses.

The lawnmower 100 depicted in FIG. 1 is a push mower. An operator can walk behind the lawnmower 100 and push the lawnmower 100 over the underlying ground surface G. In some instances, the push mower can be fully manual. That is, the operator can propel the lawnmower 100 over the underlying ground surface G by pushing the lawnmower 100 at the handle 106. In other instances, the push mower can be at least partially powered by a motor (not illustrated). The operator can engage the motor to drive one or more of the wheels 104. The operator can control the motor, and thus the rotational speed of the wheels 104, using a control feature 110 disposed on the handle 106. By way of non-limiting example, the control feature 110 can include a slider moveable between two or more positions each associated with different speeds of the motor, a pivotable throttle lever moveable between two or more positions each associated with different speeds of the motor, a paddle system including one or more paddles which can be moved to adjust the speed of the motor, two or more buttons each associated with a different speed of the motor, or the like. In some instances, rotational speed of the wheels 104 may be infinitely adjustable between two or more endpoints, e.g., between a minimum speed and a maximum speed. In other instances, the lawnmower 100 may have predefined speeds, e.g., 0.25 miles per hour (MPH), 0.5 MPH, 0.75 MPH, 1 MPH, 2 MPH, etc. The operator may select between these predefined speeds by moving the control feature 110 between predefined positions or locations.

In an embodiment, the height of the mower deck 102 can be adjustable between a plurality of different positions. An adjustment lever 112 may be moveable between a plurality of different positions, with each position being associated with a different height of the mower deck 102. As the mower deck 102 is lowered, the cutting implement lowers by a corresponding distance, resulting in shorter cut lawn. Conversely, as the mower deck 102 is raised, the cutting implement raises by a corresponding distance, resulting in longer cut grass.

During certain yardwork operations, it may be desirable to perform an auxiliary function instead of, or addition to, mowing. For example, an operator may wish to lay stripes behind the lawnmower 100 to increase aesthetic appearance of the underlying ground surface G. The operator may also wish to aerate the lawn by forming holes in the underlying ground surface G to permit oxygen and nutrients to penetrate deeper into the lawn. Yet further, the operator may wish to dethatch the lawn by picking up dead lawn and materials matted to the underlying ground surface G. The operator may also wish to pick up nuts and other debris on the underlying ground surface G. Each of these functions and more can be performed by the lawnmower 100 using an accessory feature that can be coupled to the lawnmower 100 while the lawnmower 100 is moved on the underlying ground surface G.

As depicted in FIG. 1, the accessory feature can be in the form of a towable element 114. As used herein, the term "towable" refers to a pulled arrangement whereby the accessory feature is pulled behind the lawnmower 100. For instance, the accessory feature can be coupled to the lawnmower 100 such that as the lawnmower 100 moves forward by a particular distance, the towable feature is displaced by the same, or a generally similar, distance. In some instances, the pulled accessory feature can follow the lawnmower 100, i.e., be disposed behind a portion of the lawnmower 100, such as behind the mower deck 102. In a more particular instance, the pulled accessory feature can directly follow the lawnmower 100, i.e., be disposed within an area confined by left and right sides of the lawnmower 100. In other more particular instances, the pulled accessory feature, or a portion of the pulled accessory feature, can be disposed outside of at least one of the left or right sides of the lawnmower 100 such that the accessory feature interacts with the underlying ground surface at a location where the lawnmower 100 did not immediately pass over. This may be referred to as a staggered or offset arrangement. In some instances, the term "towable" may also refer to a forward located accessory feature. The forward located accessory feature may be disposed in front of the lawnmower 100 or a portion of the lawnmower 100. By way of example, the forward location accessory feature may perform a preconditioning operation on the underlying ground surface.

The towable element 114 can be selectively coupled to the lawnmower 100 when the operator wishes to perform an auxiliary function such as those described above. In an embodiment, the towable element 114 can be selectively coupled and uncoupled relative to the lawnmower 100 without requiring use of any tools and without requiring disassembly or augmentation of any components of the lawnmower 100. For example, referring to FIG. 2, the wheels 104 of the lawnmower 100 can be coupled to one or more axles 116 which are coupled to the lawnmower 100 to support the mower deck 102. The towable element 114 (shown in dashed lines) can include one or more engagement features 118 which interface with the axles 116 of the lawnmower 100 to selectively retain the towable element 114 in coupled relationship with the lawnmower 100.

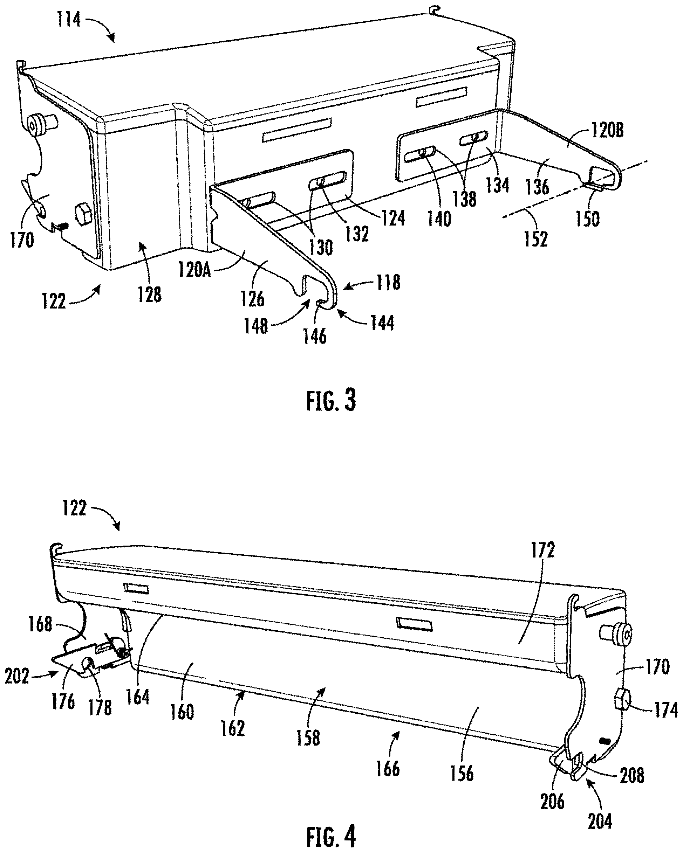

FIG. 3 illustrates the engagement features 118 including brackets 120A and 120B extending from a carriage 122 of the towable element 114. The brackets 120 can include a first bracket 120A and a second bracket 120B.

The first bracket 120A can include a first portion 124 that engages with the carriage 122 and a second portion 126 configured to engage with the axle 116 of the lawnmower 100 (FIG. 2). The first and second portions 124 and 126 can lie along planes that are perpendicular with respect to each other. In an embodiment, the first portion 124 is disposed on a forward wall 128 of the carriage 122. One or more openings 130 in the first portion 124 can be aligned with complementary openings 132 in the carriage 122 to permit installation of a fastener, e.g., a threaded fastener, through the openings 130 and into the complementary openings 132. The complementary openings 132 can be threaded to engage the fastener and secure the first bracket 120A to the carriage 122.

In an embodiment, the second bracket 120B can be reflectively symmetrical with the first bracket 120A about a centerline of the towable element 114. For example, the second bracket 120B can include a first portion 134 that engages with, e.g., is hooked on, the carriage 122 and a second portion 136 that engages with, e.g., is hooked on, the axle 116 (FIG. 2). The first portion 134 can be disposed on the forward wall 128 of the carriage 122. Openings 138 in the first portion 134 can be aligned with complementary openings 140 in the carriage 122 to permit installation of a fastener, e.g., a threaded fastener, through the openings 138 and into the complementary openings 140. The complementary openings 140 can be threaded to engage the fastener and secure the second bracket 120B to the carriage 122.

The second portions 126 and 136 of the first and second brackets 120A and 120B, respectively, can each define distal ends 142 including features that allow an operator to easily couple the towable element 114 to the lawnmower 100. For example, each of the first and second brackets 120A and 120B can include a hook 144 defining an axle receiving area 146 and an entrance 148 to the axle receiving area 146. To couple the towable element 114 with the lawnmower 100, the operator passes the hooks 144 over complementary engagement features of the lawnmower 100, e.g., the axles 116, and aligns the complementary engagement features, e.g., the axles 116, with the entrances 148 of the axle receiving area 146. Once aligned, the operator lowers the first and second brackets 120A and 120B onto the axles 116 until the axles 116 are seated within the axle receiving areas 146. As the lawnmower 100 moves, the axles 116 remain seated within the axle receiving areas 146 to retain the towable element 114 at the lawnmower 100. In an embodiment, the axle receiving areas 146 can include a gate 150 that selectively closes the entrance 148. The gate 150 may be manually actuatable between a locked state, whereby the towable element 114 is locked to the lawnmower 100, and an unlocked state, whereby the towable element 114 is removable from the lawnmower 100. The gate 150 can move between the locked and unlocked states through rotation, translation, or a combination thereof. In some instances, the gate 150 can be spring loaded, e.g., to the locked state. The gate 150 can be moved from the locked state to the unlocked state as the hook 114 is introduced to the axle 116. After the hook 114 is engaged the axle 116, i.e., after the axle 116 passes into the axle receiving area 146, the gate 150 can automatically return to the locked state. It should be understood that the features that allow the towable element 114 to be coupled to the lawnmower 100 may take other forms and may interface with other components of the lawnmower 100 such as dedicated interface points, the handle 106, or the like.

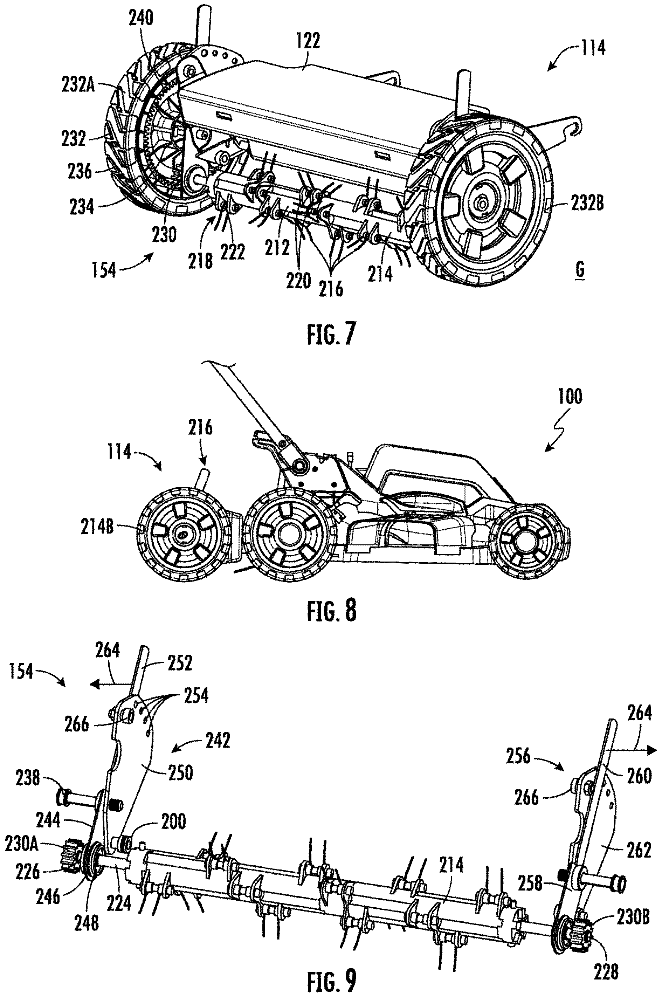

The carriage 122 can be coupled to the lawnmower 100 through the engagement features 118. As the lawnmower 100 moves, the carriage 122 remains at a relatively fixed distance with respect to the lawnmower 100. However, the carriage 122 can articulate about a pivot axis 152 formed between the engagement features 118 and the complementary engagement features, e.g., the axles 116. Thus, a relative angle between the carriage 122 and lawnmower 100 can change while the lawnmower 100 and towable element 114 traverse undulating surfaces. In this regard, the carriage 122 can remain at a relatively fixed height with respect to the underlying ground surface G at all, or substantially all, times. Maintenance of the carriage 122 at a relatively fixed height with respect to the underlying ground surface G may allow a work tool 154 (e.g., FIG. 7) received by the towable element 114 to maintain constant, or generally constant, interaction with the underlying ground surface G regardless of a given orientation of the lawnmower 100. Constant, or generally constant, interaction between the work tool 154 and the underlying ground surface G can result in a uniform, or substantially uniform, application of functionality across the entire work area which can increase aesthetic and permit more uniform functionality independent of terrain.

As depicted in FIG. 4, the carriage 122 includes an outer surface 156 defining a recess 158. In an embodiment, the recess 158 can include a generally vertical portion 160 which extends upward from a bottom side 162 of the carriage 122. The generally vertical portion 160 can abut an arcuate portion 164 which defines an upper side of the recess 158. The recess 158 can define a work tool receiving area 166. At least a portion of the work tool 154 (FIG. 7) can be disposed within the work tool receiving area 166 when the work tool 154 is engaged with the carriage 122. With the work tool 154 in the work tool receiving area 166, the operator is less likely to kick or otherwise contact the work tool 154, thereby increasing operator safety and tool longevity.

The carriage 122 can include features which selectively couple the work tool 154 to the towable element 114. As depicted in FIGS. 3 and 4, the features include end plates 168 and 170 disposed on opposite lateral ends of the carriage 122. In an embodiment, the end plates 168 and 170 can be unitary with a body 172 of the carriage 122. In other instances, the end plates 168 and 170 can include one or more separate, discrete components coupled to the body 172 of the carriage 122. For example, the end plates 168 and 170 can be formed from sheet metal and the body 172 can be formed from a polymer. The end plates 168 and 170 can each be joined to the body 172 by a fastener, e.g., a threaded fastener 174. In an embodiment, the end plates 168 and 170 can define the same, or similar, geometries as compared to one another, reflectively symmetrical about a centerline disposed in a direction of travel of the lawnmower 100.

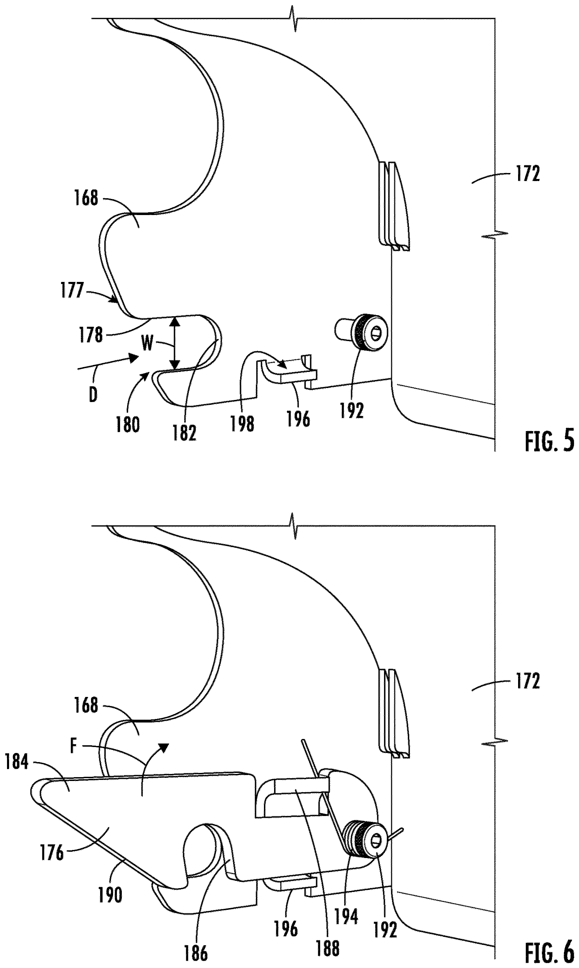

FIGS. 5 and 6 illustrate enlarged views of the first end plate 168 coupled to the body 172. In particular, FIG. 5 illustrates the first end plate 168 as seen without a gate 176 and FIG. 6 illustrates the first end plate 168 as seen with the gate 176. The first end plate 168 includes an opening 178. The opening 178 can extend from an edge 177 of the first end plate 168 towards the body 172. In an embodiment, the opening 178 is an unclosed opening, i.e., a slot, having an open entrance 180 and a closed end 182. The slot can define a width W that is generally constant along a length of the slot. In a non-illustrated embodiment, the opening 178 can be a closed opening. That is, the opening 178 can be bounded by the first end plate 168 on all lateral sides of the opening.

The gate 176 can include a body 184 defining a cutout 186, a retention feature 188, and a guide surface 190. The cutout 186 can be sized and shaped to interact with the opening 178 and the work tool 154 (e.g., FIG. 7) to retain the work tool 154 in the work tool receiving area 166 of the carriage 122. The retention feature 188 can include, for example, a projection or lip extending from the body 184 of the gate 176. In some instances, the retention feature 188 can include a folded or notched portion of the body 184 of the gate 176.

The gate 176 can be moveably coupled to the first end plate 168 to selectively retain the work tool 154 (e.g., FIG. 7) in the opening 178. For example, the gate 176 can be pivotably coupled to the first end plate 168 through a pivot point. In an embodiment, the pivot point can be defined by a stud 192 coupled to the first end plate 168 as shown in FIGS. 5 and 6. In another embodiment, the pivot point can be defined by a unitary member having a single-piece construction with the first end plate 168. The gate 176 can rotate about the pivot point, e.g., on the stud 192 (or another feature forming the pivot point), between an open position whereby lateral access to the opening 178 is permitted, and a closed position (as seen in FIG. 6), whereby lateral access to the opening 178 through the entrance 180 is restricted.

A spring 194 can bias the gate 176 to the closed position. In this regard, the gate 176 can default to the closed position when no opening force (e.g., force in a direction F as shown in FIG. 6) is applied to the gate 176. In an embodiment, the spring 194 is a torsion spring with a central coil disposed around and supported by the stud 192. The spring 194 can interact with the retention feature 188 on the gate 176 and another element of the carriage 122 to bias the gate 176 to the closed position. A stop feature 196 can be disposed on the first end plate 168 and define a stop position for the gate 176. The stop feature 196 can prevent the gate 176 from moving past the closed position under the force of the spring 194. In the depicted embodiment, the stop feature 196 is a projection extending from the first end plate 168. The projection is cut on opposite sides and folded to form a stop surface 198 which interfaces with the gate 176. By way of non-limiting example, the stop feature 196 can alternatively include a notch or dimple in the first end plate 168, a bolt or stud coupled to the first end plate 168, or the like. Alternatively, or in addition, the stop feature 196 can be part of the gate 176 and can interact with a complementary feature of the first end plate 168.

The work tool 154 (e.g., FIG. 7) can include a feature, such as an axle or pin 200 (FIG. 9), that can be inserted into the opening 178 in the direction D (FIG. 5). Upon contacting the guide surface 190 of the gate 176, further movement of the axle or pin 200 in the direction D results in the gate 176 rotating about the stud 192 in the direction shown by arrow F in FIG. 6 against the force of the spring 194. The axle or pin 200 continues to move into the opening 178 until clearing the guide surface 190. Once the axle or pin 200 is within the boundary of the cutout 186, the gate 176 returns to the closed position under force generated by the spring 194. At this time, the work tool 154 is retained in the opening 178 by the gate 176 and the towable element 114 is ready to perform an operation associated with that work tool 154.

To remove the work tool 154 from the towable element 114, the gate 176 is moved from the closed position to the open position. In an embodiment, this movement includes rotation of the gate 176 in the direction shown by arrow F in FIG. 6. To move the gate 176, the operator can grab the gate 176, e.g., at the guide surface 190 or another accessible area, and apply force in the direction shown by arrow F. Once the cutout 186 is clear of the axle or pin 200, i.e., once the cutout 186 is clear of the opening 178, the axle or pin 200 can be removed from the opening 178 in a direction opposite direction D (FIG. 5). In some instances, the operator can release the gate 176 once the axle or pin 200 is clear of the cutout 186. The guide surface 190 of the gate 176 can rest along the axle or pin 200 and force generated by the spring 194 can push the axle or pin 200 out of the opening 178.

Referring again to FIG. 4, the gate 176 and opening 178 can be part of a first attachment structure 202 of the carriage 122 for coupling the work tool 154 (FIG. 7) to the carriage 122. A second attachment structure 204 may be disposed on the second end plate 170. The second attachment structure 204 can include any similar or different characteristics as compared to the first attachment structure 202. For example, the second attachment structure 204 can include a gate 206 and an opening 208. The gate 206 can move between open and closed positions to allow the axle or pin 200 (or another axle or pin or other engagement structure of the work tool 154) to interface with the second attachment structure 204. In some instances, the second attachment structure 204 can be reflectively symmetrical with the first attachment structure 202 about a centerline of the carriage 122. As depicted in FIG. 4, the first and second attachment structures 202 and 204 are disposed on inner sides of the first and second end plates 168 and 170, respectively. In this regard, the gates 176 and 206 of the first and second attachment structures 202 and 204 are protected against impact with features of the underlying ground surface G, such as rocks, curbs, stumps, branches, and the like which might undesirably move the gate(s) 176 or 206 to the open position and permit detachment of the work tool 154 from the carriage 122. In other embodiments, at least one of the first and second attachment structures 202 or 204 can be disposed on an outer side of the first or second end plate 168 or 170, respectively.

In a non-illustrated embodiment, only one of the first or second attachment structures 202 or 204 includes a releasable interface, e.g., a gate 176 or 206 that can be moved between closed and open positions. The other of the first or second attachment structures 202 or 204 can be a fixed attachment structure, e.g., a closed opening. In this regard, installation and removal of the work tool 154 from the carriage 122 can be performed by acting on only one attachment structure 202 or 204. The other attachment structure is passive. To install or remove the work tool 154 from the carriage 122 in such configuration, the work tool 154 may be first pivoted into the passive attachment structure and then translated into the other attachment structure as described above using the gate 176 or 206.

It should be understood that in certain instances, the embodiment illustrated in FIG. 4, including first and second attachment structures 202 and 204, can operate in a similar manner as the partially passive attachment structure previously described. For example, for certain work tools 154, the operator may be able to pivot the axle or pin 200 of the work tool 154 into one of the first or second attachment structures 202 or 204 without requiring movement of the gate 176 or 206 to the open position. The operator can then translate the axle or pin 200 of the work tool 154 into the opening 178 or 208 of the other of the first or second attachment structure 202 or 204 until the corresponding gate 176 or 206 locks the axle or pin 200 in the opening 178 or 208. Once the work tool 154 is securely interfaced with the first and second attachment structures 202 and 204, the lawnmower 100 can be moved along the underlying ground surface G and the lawn can be operated on.

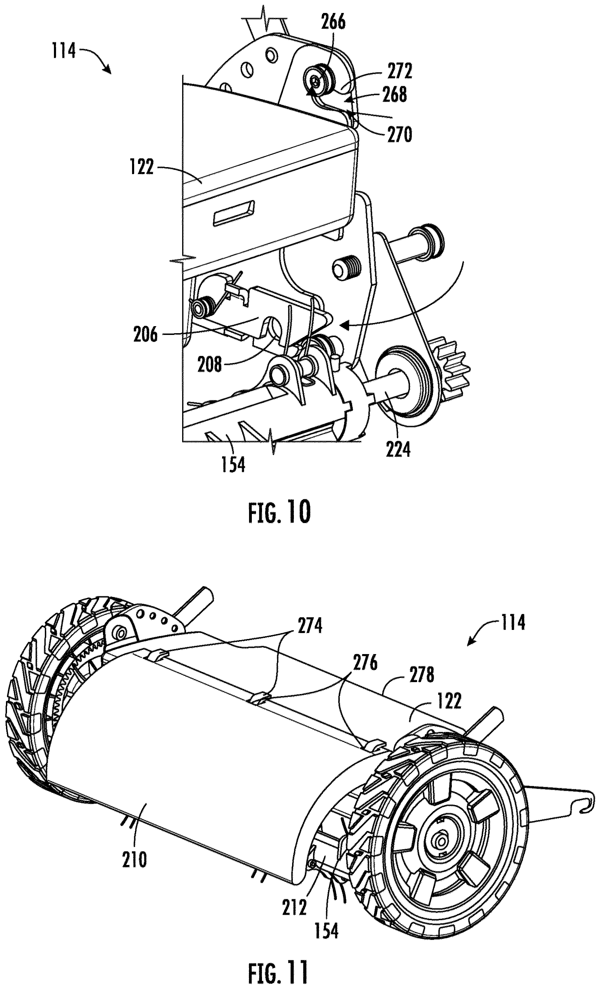

FIGS. 7 to 11 illustrate the work tool 154 in accordance with an embodiment. In particular, FIG. 7 illustrates a view of the towable element 114 including the work tool 154 coupled to the carriage 122, FIG. 8 illustrates a side view of the lawnmower 100 with the towable element 114 coupled therewith, FIG. 9 illustrates the work tool 154, FIG. 10 illustrates the towable element 114 during an installation process where the work tool 154 is being coupled to the carriage 122, and FIG. 11 illustrates the towable element 114 including a cover 210 that can prevent debris lifted by the work tool 154 from impacting an operator walking behind the towable element 114.

Referring initially to FIGS. 7 to 9, the work tool 154 can be coupled to the carriage 122 and towed behind the lawnmower 100 to perform an operation associated with that work tool 154. The work tool 154 can include a tool 212 which performs a functional operation at the underlying ground surface G. In an embodiment, the tool 212 defines a length that extends in a lateral, or substantially lateral, direction with respect to the lawnmower 100. The lateral direction is oriented perpendicular to the direction of travel of the lawnmower 100 when the lawnmower 100 moves in a straight line. The tool 212 can be disposed behind the lawnmower 100 and extend a distance in the lateral direction corresponding generally with an effective cutting dimension of the cutting implement. Thus, the tool 212 can perform the operation associated with that tool 212 at an area of the underlying ground surface G over which the cutting implement just traversed. In some embodiments, the tool 212 can define a length less than the effective cutting dimension of the cutting implement. In other embodiments, the tool 212 can define a length that is equal, or substantially equal, with the effective cutting dimension. The tool 112 can rotate about an axis, e.g., an axis oriented parallel with the lateral direction, as the towable element is moved by the lawnmower 100.

The tool 212 depicted in FIGS. 7 to 9 is a lawn dethatcher including a hub 214 and a plurality of dethatching elements 216 extending radially outward from the hub 214. As depicted, the dethatching elements 216 can be arranged in groups or sets of dethatching elements 216. Each group can include at least two dethatching elements 216, such as at least three dethatching elements 216, such as at least four dethatching elements 216. The dethatching elements 216 can each be coupled to the hub 214 through an interface 218. In an embodiment, the interface 218 can include tabs 220 projecting from the hub 214. The interface 218 can further include a bolt 222 spanning adjacent sets of tabs 220. The dethatching elements 216 can be anchored to the bolts 222. For example, one set of dethatching elements 216 can be anchored to one of the bolts 222 and another set of dethatching elements 216 can be anchored to another one of the bolts 222. In certain instances, the dethatching elements 216 are moveable relative to the bolts 222. For example, the dethatching elements 216 may rotate around the bolts 222. In some instances, the dethatching elements 216 can be spring biased to a particular orientation or position with respect to the hub 214, e.g., a radially outward extending orientation. The dethatching elements 216 can be sufficiently rigid to interact with the underlying ground surface G and pick up thatch, i.e., matted, typically dead grass, while also being sufficiently deformable or deflectable to pass over obstacles and avoid getting stuck in the thatch or in underlying obstacles.

The hub 214 can be coupled with a shaft 224. In some instances, the shaft 224 can be unitary with the hub 214. In other instances, the shaft 224 can include a separate component mated with the hub 214. In an embodiment, the shaft 224 defines a length greater than a length of the hub 214 such that the shaft 224 can extend from the hub 214, e.g., in both lateral directions. The shaft 224 can be rotationally pinned relative to the hub 214 such that the shaft 224 and hub 214 rotate together.

The shaft 224 defines opposite distal ends 226 and 228. In an embodiment, at least one of the distal ends 226 or 228, such as both of the distal ends 226 and 228, can support a gear 230A and 230B, respectively (hereinafter, collectively referred to as gears 230). The gears 230 can be rotationally pinned relative to the shaft 224 such that rotational force imparted on the gears 230 causes the hub 214 to rotate.

As shown in FIG. 7, the work tool 154 includes a walking element 232 that supports the tool 212 above the underlying ground surface G. By way of non-limiting example, the walking element 232 can include a wheel, a plurality of wheels (such as a first wheel 232A disposed on a first lateral side of the work tool 154 and a second wheel 232B disposed on a second lateral side of the work tool 154 opposite the first lateral side), a tread, a plurality of treads, another similar ground traversing component or components, or any combination thereof.

The first wheel 232A can include a hub 234 and a tread 236 disposed around the hub 234. The hub 234 of the first wheel 232A can be coupled to the tool 212 via an axle 238 disposed on the work tool 154. The first wheel 232A can rotate relative to the axle 238. The first wheel 232A can define a geared surface 240. In an embodiment, the geared surface 240 is disposed on the hub 234 along a radially inner surface of the hub 234. The gears 230 can interface with the geared surface 240 of the first wheel 232A. As the first wheel 232A rotates, the geared surface 240 of the first wheel 232A moves relative to the gears 230 on the shaft 224, rotatably driving the gears 230 and thus driving the tool 212. While not illustrated in FIG. 7, in one embodiment, the second wheel 232B can define a similar, or same, configuration as described above with respect to the first wheel 232A. For example, the second wheel 232B can define a geared surface which interfaces with the gear 230B on the opposite lateral side of the tool 212.

The geared surface 240 can define a gear ratio relative to the gear 230. The gear ratio can be at least 1.0, such as at least 2.0, such as at least 3.0, such as at least 4.0, such as at least 5.0, such as at least 7.5, such as at least 10.0, such as at least 12.5, such as at least 15.0, such as at least 17.5, such as at least 20.0, such as at least 25.0, such as at least 30.0, such as at least 35.0, such as at least 40.0, such as at least 50.0, such as at least 75.0. With a gear ratio above 1.0, the tool 212 can rotate relatively faster than the walking element 232. For example, with a gear ratio of 50.0, every rotation of the first and second wheels 232A and 232B causes 50 rotations of the tool 212. As such, the tool 212 can perform functionality associated with the underlying ground surface G without requiring that the lawnmower 100 move quickly over the underlying ground surface G. This may be referred to as active functionality, whereby the tool 212 operates at an n: 1 speed relative to movement of the lawnmower 100 over the underlying ground surface G, where n is greater than 1.

In some instances, it may be desirable to adjust a height of the tool 212 relative the underlying ground surface G. For example, some lawns may require application of relatively large forces to dethatch matted grass and debris while other lawns require relatively lighter forces or are damaged by the application of large amounts of force generated by the dethatching elements 216. To accommodate different lawns and different conditions, the tool 212 can be raised and lowered relative to the underlying ground surface G.

The working tool 154 can include an adjustment feature 242 that raises and lowers the tool 212 relative to the underlying ground surface G. The adjustment feature 242 can include a first bracket 244 defining an opening 246 through which the shaft 224 passes. A bearing 248 can be disposed within the opening 246 between the first bracket 244 and the shaft 224. The bearing 248 can reduce rolling resistance between the tool 212 and the first bracket 244. The first bracket 244 can support the axle 238 (which supports the first wheel 232A). The adjustment feature 242 can further include an adjustment plate 250. The adjustment plate 250 is coupled to the first bracket 244, e.g., rotatably coupled to the first bracket 244, and also the axle or pin 200 which attaches the working tool 154 to the first end plate 168. In an embodiment, the adjustment plate 250 can be coupled to the first bracket 244 by the axle 238.

The adjustment plate 250 can include a plurality of stop positions, e.g., holes 254 or detents, which can each interface with a complementary feature of a user engageable member 252 to selectively retain the adjustment plate 250 at a fixed position with respect to the first bracket 244. In some instances, the user engageable member 252 may be part of the first bracket 244. When the user adjusts the user engageable member 252 to interface with a different stop position, the relative angle between the first bracket 244 and the adjustment plate 250 changes, resulting in a different position of the first and second wheels 232A and 232B relative to the tool 212. For example, the adjustment plate 250 is engaged with the user engageable member 252 at a first stop position as illustrated in FIG. 9. In the first position, the tool 212 is at a lowest height relative to the underlying ground surface G. That is, the dethatching elements 216 of the tool 212 press hardest into the underlying ground surface when the user engageable member 252 is at the first stop position. As the operator moves the user engageable member 252 towards the other stop positions (each stop position being associated with a different hole 254 in the adjustment plate 250), the relative height of the tool 212 increases with respect to the underlying ground surface.

The above-described adjustment feature 242 can be mirrored on the opposite side of the working tool 154. For example, the working tool 154 can further include an adjustment feature 256 including a second bracket 258, a user engageable member 260, and an adjustment plate 262. The second bracket 258 can have any similar or different characteristics as compared to the first bracket 244. The user engageable member 260 can have any similar or different characteristics as compared to the user engageable member 252. The adjustment plate 262 can have any similar or different characteristics as compared to the adjustment plate 250. In some instances, the operator may adjust the relative height of the tool 212 by adjusting only one of the adjustment features 242 or 256. In other instances, the operator may be required to adjust both of the adjustment features 242 and 256 simultaneously to adjust the height of the tool 212. By way of non-limiting example, the operator can adjust the relative position of the user engageable member(s) 250 or 260 by applying force to the user engageable member(s) 250 or 260 in a direction indicated by arrow 264. Application of such force causes the user engageable member(s) 250 or 260 to deflect which removes the feature of the user engageable member(s) 250 or 260 from a current stop position, i.e., hole 254. The operator can then rotate the user engageable member(s) 250 or 260, e.g., about a pivot point coaxial with the shaft 224, and release the user engageable member(s) 250 or 260 to cause the feature to interface with a different stop position, i.e., hole 254.

FIG. 10 illustrates the working tool 154 as it is being installed relative to the carriage 122 in accordance with an exemplary embodiment. As previously described, the shaft 224 of the working tool 154 can interface with the gate 176 and the opening 178 to form a first point of contact and retain the tool 212 at the work tool receiving area 166 (FIG. 4). The shaft 224 may further interface with the gate 206 and opening 208 to form a second point of contact with the carriage 122. In addition to engagement between the shaft 224 and the openings 178 and 208 at two points of contact, the working tool 154 can be further coupled to the carriage 122 via a secondary interface. The secondary interface can include complementary mating structures of the working tool 154 and the carriage 122. By way of non-limiting example, the working tool 154 can include a secondary engagement structure 266, such as a stud, (see also FIG. 9) which interfaces with a secondary slot 268 of the carriage 122. The secondary engagement structure 266 may be interfaced with the secondary slot 268 prior to coupling the shaft 224 with the opening 178 or 208. That is, the secondary interface may be interfaced prior to the two points of contact formed between the shaft 224 and the openings 178 and 208. In certain instances, this may be reversed such that the stud is part of the carriage and the slot is part of the working tool 154.

To install the secondary engagement structure 266 within the secondary slot 268, the work tool 154 is moved into position such that the secondary engagement structure 266 is aligned with an opening 270 of the slot 268. The working tool 154 is then moved until the secondary engagement structure 266 is disposed within the slot 268. The slot 268 can define a lip 272 (or other retention feature or gate) which allows the secondary engagement structure 266 to remain within the slot 268 prior to coupling the shaft 224 with the openings 178 and 208. After the secondary engagement structure 266 is seated within the slot 268, the shaft 224 can be introduced into the openings 178 and 208 in a manner as described above. It should be understood that the secondary engagement structure 266 can include engagement structures 266 disposed on both lateral sides of the tool 212, e.g., engagement structures 266 coupled with each of the adjustment plates 250 and 260. The first end plate 168 can include a slot similar to the slot 268 to receive the engagement structure 266 on that lateral side of the work tool 154. It should be understood that the above arrangement can be reversed. For example, the gate 206 and opening 208 can be part of an upper assembly, e.g., where the secondary engagement structure 266 is depicted, and the secondary engagement structure 266 can be part of a lower assembly, e.g., where the gate 206 and opening 208 are depicted. Installation of the work tool 154 can also be reversed such that a user initially interfaces the bottom portion of the work tool 154 at the secondary engagement structure 266 and then rotates the top portion of the work tool 154 to interface with the gate 206 and opening 208.

FIG. 11 depicts a cover 210 coupled with the towable element 114. The cover 210 can include an arcuate surface which extends above at least a portion of the work tool 154, such as the tool 212. In an embodiment, the cover 210 can be coupled to the towable element 114 via one or more hooks 274 disposed on the carriage 122. The cover 210 can include corresponding openings 276 which interface with the hooks 274 to retain the cover 210 at a relatively fixed position with respect to the carriage 122. Alternatively, the cover 210 can interface with the carriage 122 via a fastener (e.g., a threaded fastener), a snap fit, hook and loop, adhesive, welding, or be unitary with the carriage 122. In some instances, the cover 210 can move relative to the carriage 122. For instance, the cover 210 may pivot about the hooks 274. Thus, the cover 210 can better absorb impact caused by flying debris and accommodate chunks of debris and lawn that may become stuck within the tool 212.

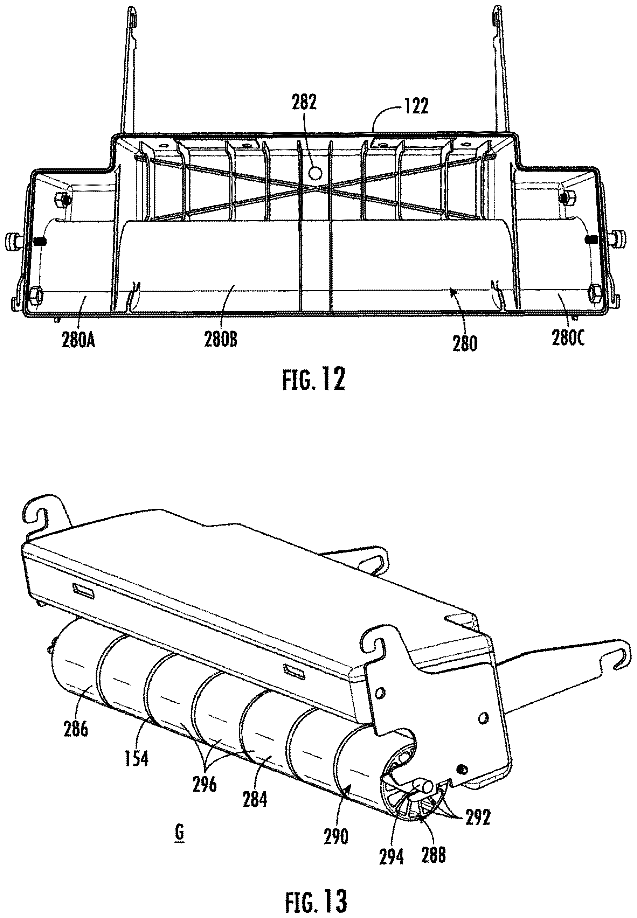

In some instances, it may be desirable to weight the towable element 114 to increase effectiveness of the tool 212. FIG. 12 illustrates a view of the carriage 122 in an open configuration as seen with a top 278 (FIG. 11) of the carriage 122 removed. In the open configuration, an internal volume 280 of the carriage 122 is accessible. An operator can fill, or partially fill, the internal volume 280 with a fill material to selectively increase the weight of the towable element 114. Exemplary fill materials include water, sand, dirt, rocks, etc. In some instances, the operator can add the fill material evenly within the internal volume 280 to generate a uniform weight profile across the entire towable element 114. In other instances, the operator can add the fill material in a non-even distribution within the internal volume 280 to generate a desired weight profile. In an embodiment, the internal volume 280 can include discrete portions such as a first portion 280A, a second portion 280B and a third portion 280C. Each portion can be separately weighted to form a desired weight profile. The internal volume 280 may include a drain or emptying port 282 which permits an operator to selectively unload the fill material from the internal volume 280. Alternatively, the operator can tilt the towable element 114 to expel material from the internal volume 280 or trowel the fill material from the internal volume 280 by hand.

As described above, the work tool 154 can be swapped between a plurality of different work tools 154. The plurality of different work tools can include stripers, aerators, dethatchers, nut pickers, scarifiers, etc.

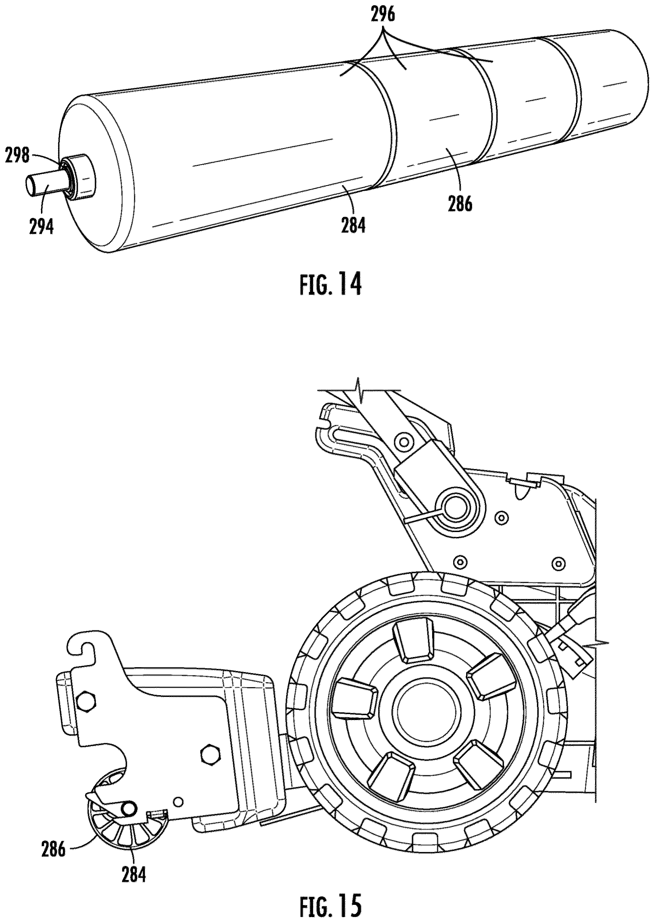

FIGS. 13 to 15 illustrate a striper 284 acting as the work tool 154 in accordance with an embodiment. The striper 284 can generally include an elongated body 286 spanning the first and second attachment structures 202 and 204. The elongated body 286 can be a cylindrical wheel. In some instances, the cylindrical wheel can include a hollow core 288 and an outer surface 290 which interfaces with the underlying ground surface G. Spokes 292 can extend radially outward from a central axle 294 to support the outer surface 290. In an embodiment, the outer surface 290 and spokes 292 can be deformable to take up and absorb obstacles encountered by the striper 284. In another embodiment, at least one of the outer surface 290 and spokes 292 can be rigid. The central axle 294 can interface with the first and second attachment structures 202 and 204, e.g., in a manner as described above. However, unlike the dethatcher, the striper 284 may not interface with the slots secondary interface, i.e., the slots 268. The elongated body 286 may passively rotate as the striper 284 is moved along an underlying ground surface G.

In some instances, the striper 284 can include a plurality of segments 296. The segments 296 can be stacked along the central axle 294 and retained thereon by a locking feature, such as a c-clamp 298. The c-clamp 298 can rest within a groove of the central axis 294 to retain the stacked segments 296 on the central axle 294. The segments 296 can be rotationally pinned relative to one another or freely moveable with respect to each other. In some instances, the striper 284 can press against the ground surface G under the weight of the towable element 114 to create lawn striping. In other instances, the towable element 114 can be weighted by filler material applied in the internal volume 280 to exert additional downward force through the striper 284 onto the underlying ground surface G.

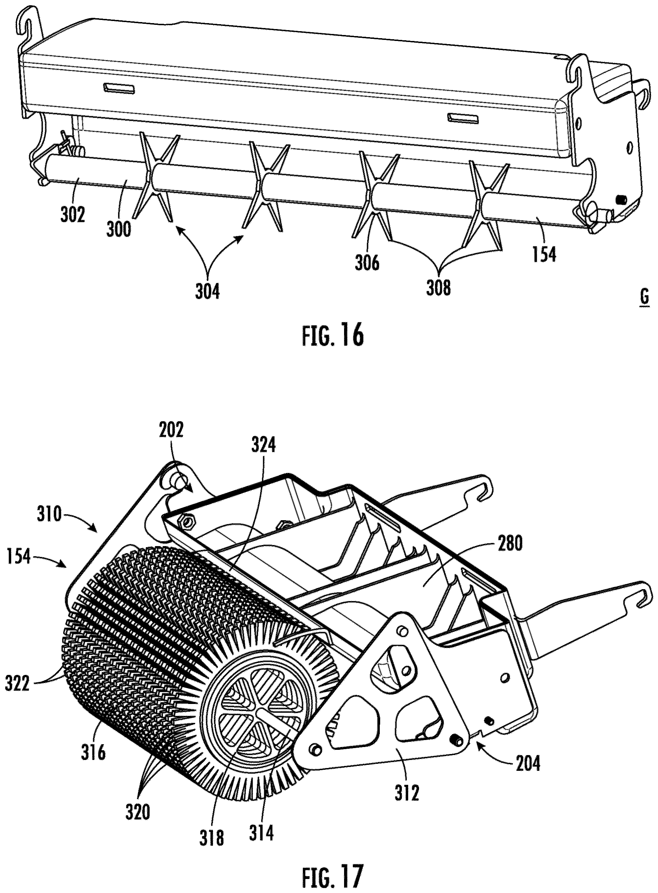

FIG. 16 illustrates an aerator 300 acting as the work tool 154 in accordance with an embodiment. The aerator 300 can generally include a shaft 302 and a plurality of aerating elements 304 coupled to the shaft 302. In the depicted embodiment, the aerating elements 304 each include a central member 306 interfaced with the shaft 302 and tines 308 projecting from the central member 306. The depicted embodiment illustrates four aerating elements 304 each including four tines 308, however it should be understood that the aerator 300 can include any number of aerating elements 304 including any number of tines 308. Moreover, while the tines 308 are all shown oriented at the same relative angle as one another, in other embodiments, the tines 308 can be rotationally offset from one another. The shaft 302 can passively rotate as the aerator 300 is moved along an underlying ground surface G. In some instances, the tines 308 can penetrate into the underlying ground surface G under the weight of the towable element 114. In other instances, the towable element 114 can be weighted by filler material applied in the internal volume 280 to exert additional downward force through the tines 308 into the underlying ground surface G.

FIG. 17 illustrates a nut picker 310 acting as the work tool 154 in accordance with an embodiment. The nut picker 310 can generally include a framework 312 configured to be coupled with the first and second attachment structures 202 and 204 and the secondary slot 268. An axle 314 is coupled to the framework 312 and defines a rotatable interface for a nut picking tool 316. The nut picking tool 316 can include a plurality of hubs 318 positioned adjacent to one another, each having a plurality of fingers 320 extending radially outward from the hubs 318. The fingers 320 can include enlarged heads 322 disposed at or adjacent to distal ends of the fingers 320. As the nut picking tool 316 rotates on the underlying ground surface G, nuts and other similar shaped objects become trapped between radial and lateral adjacent fingers 320 and cannot pass the enlarged heads 322 so as to disengage from the nut picking tool 316. A comb 324 can extend into the fingers 320 to remove nuts and other accumulated materials therefrom. In one embodiment, the comb 324 is part of the framework 312. In another embodiment, the comb 324 can include a separate, discrete piece coupled to the carriage 122 or another portion of the towable element 114. In certain instances, the top 278 (FIG. 11) of the carriage 122 can be removed and nuts can pass from the comb 324 to the internal volume 280. In this regard, the internal volume 280 can serve as a temporary storage area for collected nuts.

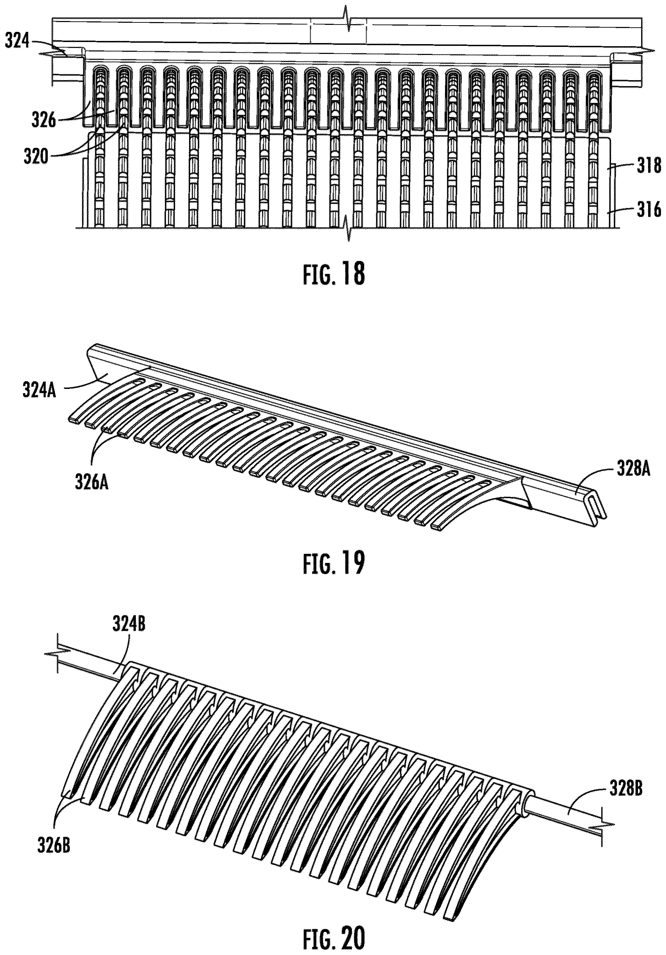

FIG. 18 illustrates the comb 324 as seen with teeth 326 of the comb 324 extending between adjacent fingers 320 of the nut picking tool 316. As depicted, the teeth 326 can be sized, shaped and spaced apart so as to fit between adjacent hubs 318. In some instances, the teeth 326 can extend all the way to the outermost hubs 318. In other instances, the teeth 326 can extend a majority of the distance to the outermost hubs 318.

FIGS. 19 and 20 illustrate combs 324A and 324B, respectively, in accordance with different embodiments. The comb 324A depicted in FIG. 19 has a single piece construction with teeth 326A integrated into a support bar 328A. The comb 324B depicted in FIG. 20 has a multiple piece construction with individual teeth 326B independently coupled together through a common support bar 328B.

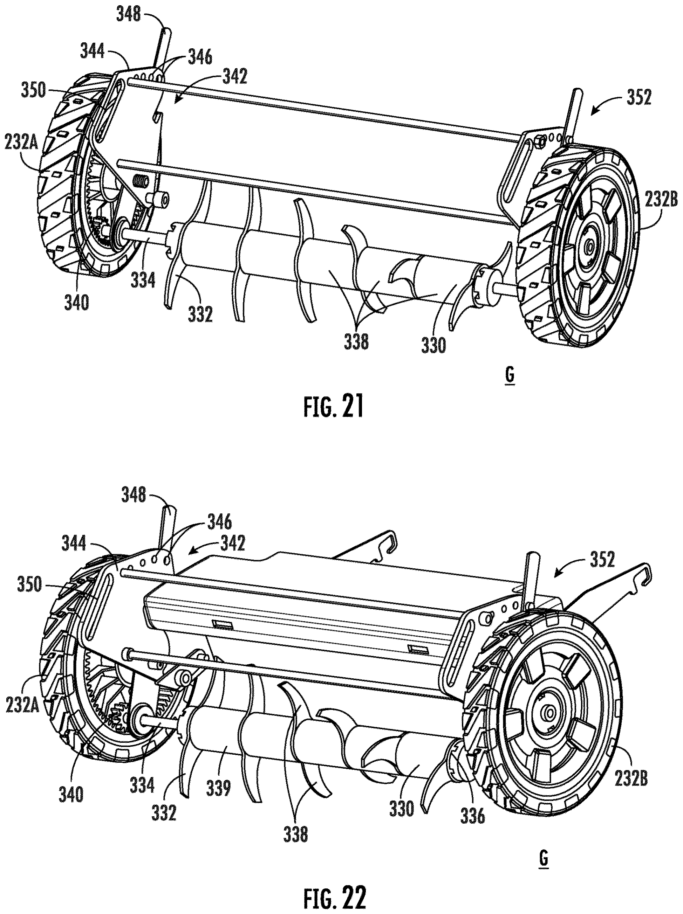

FIGS. 21 and 22 illustrate a scarifier 330 acting as the work tool 154 in accordance with an embodiment. The scarifier 330 generally includes a plurality of scarifier blades 332 that rotate about an axis defined by a shaft 334. By way of example, the scarifier 330 can include at least two scarifier blades 332, such as at least three scarifier blades 332, such as at least five scarifier blades 332. The scarifier blades 332 can each include a central hub 336 and one or more blade segments 338 extending from the central hub 336. For example, the scarifier blades 332 can include two blade segments 338 extending from opposite sides of the central hub 336. The scarifier blades 332 can be rotationally pinned to the shaft 334, directly or indirectly, such that rotation of the shaft 334 causes the scarifier blades 332 to rotate. As depicted, adjacent scarifier blades 332 can be rotationally staggered (offset) relative to one another. By way of non-limiting example, the scarifier blades 332 can form an offset whereby each scarifier blade 332 is rotationally offset from an adjacent scarifier blade 332 by the same relative rotational displacement, resulting in a wave motion when the scarifier blades 332 interface with the underlying ground surface G. The scarifier blades 332 can be separated from one another by spacers 339 which maintain the scarifier blades 332 at fixed distances relative to one another during rotation of the shaft 334.

Similar to the aforementioned dethatcher, the scarifier 330 can include one or more gears 340 rotationally pinned relative to the shaft 334 such that rotational force imparted on the gear(s) 340 causes the shaft 334, and thus the scarifier blades 332, to rotate. As the towable element 114 is moved along the ground, rotation of the first and second wheels 232A and 232B drives the gears 340, causing the shaft 334 to rotate and thus driving the scarifier 330.

The scarifier 330 can include an adjustment feature 342 that raises and lowers the scarifier 330 relative to the underlying ground surface G. The adjustment feature 342 can include any one or more similar feature as compared to the adjustment feature 242. For example, the adjustment feature 342 can include an adjustment plate 344 including a plurality of stop positions, e.g., holes 346, which can each interface with a complementary feature of a user engageable member 348 to selectively retain the adjustment plate 344 at a fixed position, and thus maintain the scarifier 330 at a fixed height. In an embodiment, the adjustment plate 344 can include a handle 350 to permit a user to more easily grasp the adjustment plate 344 when adjusting the height of the scarifier 330.

The above-described adjustment feature 342 can be mirrored on the opposite side of the scarifier 330. For example, the scarifier 330 can further include an adjustment feature 352 on an opposite side of the scarifier 330. The adjustment feature 352 can have any similar or different characteristics as compared to the adjustment feature 342. In some instances, the operator may adjust the relative height of the scarifier 330 by adjusting only one of the adjustment features 342 or 352. In other instances, the operator may be required to adjust both of the adjustment features 342 and 352 simultaneously to adjust the height of the scarifier 330.

Embodiments described herein allow a lawnmower, or other moveable tool, access to additional functionality without compromising usability of the underlying lawnmower, or other moveable tool. A towable element can be coupled to the lawnmower and selectively receive a plurality of different work tools. By swapping between the different work tools, an operator can selectively adjust lawnmower functionality. Some work tools can operate passively whereby the work tool rotates as a result of the work tool directly interfacing with the ground during movement of the lawnmower. Passive work tools generally operate at a 1:1 speed relative to movement of the work tool over the underlying ground surface. For example, a striper having an elongated body with a 25 centimeter (cm) circumference completes one revolution, or approximately one revolution, for every 25 cm of forward travel on the underlying ground surface. Similarly, a striper having an elongated body with a 40 cm circumference completes one revolution, or approximately one revolution, for every 40 cm of travel on the underlying ground surface. Other work tools can operate actively whereby the work tool operates at an n: 1 speed relative to movement over the underlying ground surface, where n is greater than 1. For example, dethatchers with a gear ratio of 50 operate at a 50:1 speed relative to the speed of the wheels. For simplicity and by way of non-limiting example, assuming the wheels and dethatcher both have the same 50cm circumference, the dethatcher completes one revolution, or approximately one revolution, for every 1 cm of travel on the underlying ground surface, or 50 revolutions, or approximately 50 revolutions, for every 50 cm of travel on the underlying ground surface. This allows functionality associated with higher operating speeds (like dethatching and scarifying) without requiring a motor to drive the work tool and without requiring the operator to move the lawnmower at high speeds. While active functionality is described by way of example with respect to the dethatcher and scarifier, it should be understood that other work tools can operative actively.

Further aspects of the invention are provided by one or more of the following embodiments:
Embodiment 1. A towable element for a lawnmower, the towable element comprising: a carriage defining a work tool receiving area; an engagement feature coupled to the carriage, wherein the engagement feature removably interfaces with a complementary engagement feature of the lawnmower to selectively couple the towable element with the lawnmower; and a work tool removably disposed at the work tool receiving area, wherein the work tool acts on an underlying ground surface below the towable element.
Embodiment 2. The towable element of any one or more of the embodiments, wherein the work tool rotates along an axis parallel with a lateral dimension of the carriage as the towable element is towed by the lawnmower.
Embodiment 3. The towable element of any one or more of the embodiments, wherein the work tool is selectable from a plurality of different work tools, the plurality of different work tools comprising a striper, an aerator, a dethatcher, a nut picker, and a scarifier.
Embodiment 4. The towable element of any one or more of the embodiments, wherein the work tool is removably retained in the work tool receiving area by a first gated opening comprising an opening that receives an axle of the work tool, and a gate moveable between an open position, in which the work tool is receivable and removable from the opening, and a closed position, in which the work tool is retained in the opening.
Embodiment 5. The towable element of any one or more of the embodiments, wherein the work tool is further removably retained in the work tool receiving area by a second gated opening comprising an opening that receives the axle of the work tool, and a gate moveable between an open position, in which the work tool is receivable and removable from the opening, and a closed position, in which the work tool is retained in the opening, and wherein the first and second gated openings are disposed on opposite lateral sides of the carriage.
Embodiment 6. The towable element of any one or more of the embodiments, wherein the work tool is further removably retained in the work tool receiving area by a secondary slot, the secondary slot disposed on a same lateral side of the carriage as the first gated slot.
Embodiment 7. The towable element of any one or more of the embodiments, wherein the carriage defines an inner compartment configured to receive a material, and wherein the inner compartment is selectively closable by a lid.
Embodiment 8. A lawnmower comprising: a plurality of wheels; a mower deck supported by the plurality of wheels; a cutting implement disposed below the mower deck; a motor to drive the cutting implement; a handle extending rearward from the mower deck; a towable element removably coupled to a complementary engagement feature of the lawnmower, the towable element comprising: a carriage defining a work tool receiving area; an engagement feature coupled to the carriage, wherein the engagement feature removably interfaces with the complementary engagement feature of the lawnmower to selectively couple the towable element with the lawnmower; and a work tool removably disposed at the work tool receiving area, wherein the work tool acts on an underlying ground surface below the towable element.
Embodiment 9. The lawnmower of any one or more of the embodiments, wherein at least one of the wheels of the lawnmower is coupled to an axle such that the at least one wheel is rotatable about an axis coaxial with the axle, wherein the axle forms the complementary engagement feature, and wherein the engagement feature comprises a hook extending from the carriage configured to be removably hooked to the axle.
Embodiment 10. The lawnmower of any one or more of the embodiments, wherein the carriage is supported on the ground by only the engagement feature and the work tool.
Embodiment 11. The lawnmower of any one or more of the embodiments, wherein the carriage articulates relative to the lawnmower about a pivot axis formed at the complementary engagement feature.
Embodiment 12. The lawnmower of any one or more of the embodiments, wherein the work tool is removably retained in the work tool receiving area by a plurality of gated openings, and wherein the work tool comprises a work tool, the work tool comprising: an attachment feature configured to interface with the plurality of gated openings to removably retain the work tool in the work tool receiving area; a walking element configured to support the work tool while the lawnmower traverses the underlying ground surface; and a tool operably coupled to the walking element such that movement of the walking element drives the tool to move.
Embodiment 13. A work tool for a towable element, the towable element being configured to removably couple to a complementary engagement feature of a lawnmower, the work tool comprising: an attachment feature configured to interface with a plurality of gated openings in a carriage of the towable element to removably retain the work tool in a work tool receiving area of the carriage; a walking element configured to support the work tool while the lawnmower traverses the underlying ground surface, wherein the walking element is integral with the work tool; and a tool operably coupled to the walking element such that movement of the walking element drives the tool to move.
Embodiment 14. The work tool of any one or more of the embodiments, wherein the walking element comprises a wheel, wherein the wheel comprises a geared surface, wherein the tool comprises a gear interfaced with the geared surface, and wherein rotation of the wheel caused by movement along the underlying ground surface drives the tool to rotate.
Embodiment 15. The work tool of any one or more of the embodiments, wherein the geared surface is disposed on a radially inner surface of the wheel.
Embodiment 16. The work tool of any one or more of the embodiments, wherein the tool comprises a lawn dethatcher, and wherein the lawn dethatcher is rotatably driven by movement of the work tool along the underlying ground surface.
Embodiment 17. The work tool of any one or more of the embodiments, further comprising an adjustment feature that adjusts a height of the tool relative to the underlying ground surface.
Embodiment 18. The work tool of any one or more of the embodiments, wherein the work tool is further removably retained in the work tool receiving area of the carriage by a secondary attachment feature, the secondary attachment disposed on a same lateral side of the work tool as the attachment feature.
Embodiment 19. The work tool of any one or more of the embodiments, wherein the attachment feature comprises an axle.
Embodiment 20. The work tool of any one or more of the embodiments, wherein the gated openings are spring biased to a closed position.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A towable element for a lawnmower, the towable element comprising:
a carriage defining a work tool receiving area;
an engagement feature coupled to the carriage, wherein the engagement feature removably interfaces with a complementary engagement feature of the lawnmower to selectively couple the towable element with the lawnmower; and
a work tool removably disposed at the work tool receiving area, wherein the work tool acts on an underlying ground surface below the towable element.

2. The towable element of claim 1, wherein the work tool rotates along an axis oriented parallel with a lateral dimension of the carriage as the towable element is moved by the lawnmower.

3. The towable element of claim 1, wherein the work tool is selectable from a plurality of different work tools, the plurality of different work tools comprising a striper, an aerator, a dethatcher, a nut picker, and a scarifier.

4. The towable element of claim 1, wherein the work tool is removably retained in the work tool receiving area by a first gated opening comprising an opening that receives an axle of the work tool, and a gate moveable between an open position, in which the work tool is receivable and removable from the opening, and a closed position, in which the work tool is retained in the opening.

5. The towable element of claim 4, wherein the work tool is further removably retained in the work tool receiving area by a second gated opening comprising an opening that receives the axle of the work tool, and a gate moveable between an open position, in which the work tool is receivable and removable from the opening, and a closed position, in which the work tool is retained in the opening, and wherein the first and second gated openings are disposed on opposite lateral sides of the carriage.

6. The towable element of claim 4, wherein the work tool is further removably retained in the work tool receiving area by a secondary opening, the secondary opening disposed on a same lateral side of the carriage as the first gated opening.

7. The towable element of claim 1, wherein the carriage defines an inner compartment configured to receive a ballast material.

8. A lawnmower comprising:
a plurality of wheels;
a mower deck supported by the plurality of wheels;
a cutting implement disposed below the mower deck;
a motor to drive the cutting implement;
a handle extending rearward from the mower deck; and
the towable element of claim 1 removably coupled to a complementary engagement feature of the lawnmower.

9. The lawnmower of claim 8, wherein at least one of the wheels of the lawnmower is coupled to an axle such that the at least one wheel is rotatable about an axis coaxial with the axle, wherein the axle forms the complementary engagement feature, and wherein the engagement feature comprises a hook extending from the carriage configured to be removably hooked to the axle.

10. The lawnmower of claim 8, wherein the carriage is supported on the ground by only the engagement feature and the work tool.

11. The lawnmower of claim 8, wherein the carriage articulates relative to the lawnmower about a pivot axis formed at the complementary engagement feature.

12. The lawnmower of claim 8, wherein the work tool is removably retained in the work tool receiving area by a plurality of gated openings, and wherein the work tool comprises a work tool, the work tool comprising:
an attachment feature configured to interface with the plurality of gated openings to removably retain the work tool in the work tool receiving area;
a walking element configured to support the work tool while the lawnmower traverses the underlying ground surface; and
a tool operably coupled to the walking element such that movement of the walking element drives the tool to move.

13. The towable element of claim 1, wherein the work tool comprises:
an attachment feature configured to interface with a plurality of gated openings in the carriage to removably retain the work tool in the work tool receiving area;
a walking element configured to support the work tool while traversing an underlying ground surface, wherein the walking element is integral with the work tool; and
a tool operably coupled to the walking element such that movement of the walking element drives the tool to move.

14. The towable element of claim 13, wherein the walking element comprises a wheel, wherein the wheel comprises a geared surface, wherein the tool comprises a gear interfaced with the geared surface, and wherein rotation of the wheel caused by movement along the underlying ground surface drives the tool to rotate.

15. The towable element of claim 13, further comprising an adjustment feature that adjusts a height of the tool relative to the underlying ground surface.
